# EUROPEAN PATENT APPLICATION

(11) **EP 3 584 078 A1**
(43) Date of publication of application: **25.12.2019**
(21) Application number: 19156314.7
(22) Date of filing: 08.02.2019
(51) Int. Cl.: B32B 27/08, B32B 5/22, B32B 27/20, B32B 27/30, B32B 27/32, B32B 27/34, B32B 27/36, B32B 27/40, B32B 1/02, B32B 3/28, B32B 3/30, F25D 23/06, B65D 65/40

(54) **TEXTURED PIGMENTED HOT STITCHED COLOR LINER SYSTEM**

(30) Priority: 29.03.2018 US 201815940310
(71) Applicant: Whirlpool Corporation, Benton Harbor, MI 49022 (US)
(72) Inventor: Khizar, Muhammad, 21024 Biandronno - Frazione Cassinetta (IT); Buzzi, Ermanno, 21024 Biandronno - Frazione Cassinetta (IT)
(74) Representative: Spina, Alessandro

(57) **Abstract**

A method (100) of making a liner (10) for an appliance (14) is provided. The method (100) includes mixing (104) a polymeric capping layer precursor and a pigment additive (16) to form a color capping layer (18). The method (100) further includes extruding (108) a polymeric base resin (20) to form a polymeric base layer (22) at a base layer formation temperature. The method (100) further includes laminating (112) a barrier layer (26) between the polymeric base layer (22) and the color capping layer (18) to form the liner (10) at about the base layer formation temperature. The method (100) also includes forming (116) a textured pattern (24) on an outer surface (28) of the color capping layer (18). The formed liner (10) includes a capping region (30), a barrier region (34), and a base region (38), wherein the capping region (30) includes the pigment additive (16).

## Description

### BACKGROUND

The present disclosure generally relates to liners for appliances, particularly, pigmented liners for refrigeration applications and methods for making them.

### BACKGROUND OF THE INVENTION

Liners having particular colors, hues, tints, and the like are desired for many appliance-related applications, such as refrigeration appliances. As appliance designers have recently placed more emphasis on interior design and lighting (e.g., given the lower energy usage of light-emitting diode (LED) sources), the importance of interior aesthetics has increased for many consumers. Similarly, appliance manufacturers often emphasize aesthetics, including interior design approaches, in attempting to obtain brand differentiation from their competitors.

Liners employed in appliances, including refrigeration appliances, are often produced with extrusion processes. As these liners often are fabricated from two or more layers, conventional approaches to adding color to these liners often involve adding pigments to each extruder employed in making a layer employed in the liner. As pigments are added to multiple extruders, the complexity, repeatability, and manufacturing cost of matching colors increases significantly for a liner that comprises two or more layers having pigments. Further, as significant loadings of pigments in these multi-layer liners are often employed, down-stream processes such as thermal forming used to incorporate the liners into an end product can lead to local discoloration and yield losses. Further, multiple and cost-intensive extrusion runs are often required to fabricate a liner having multiple, extruded layers with pigments that match a particular color, tint, or hue. Still further, these approaches for making a liner having multiple, extruded pigmented layers require one or more adhesives to bond the layers, which increases the cost and can decrease manufacturing yield.

Colored liners currently being utilized in appliances frequently present problems during manufacturing since these liners readily show scratches or defects in the liner surface where the pigment is incorporated. Such scratches imparted on the liner during either the manufacturing process or use by consumers can lead to premature wearing where the inside surface of the refrigeration appliance can look excessively worn or damaged. The flexibility and ability to produce liners where scratches are not readily shown would be beneficial to both manufactures and users for both the production process and downstream aesthetic appearances.

Accordingly, there is a need for methods of making liners, particularly pigmented liners for refrigeration appliances, which are repeatable, with high manufacturing flexibility, and low in cost. There is also a need for pigmented liners that do not readily show scratches or other wear marks that may be transferred to the liner surface during fabrication or consumer use.

### SUMMARY

In at least one aspect, a method of making a liner for an appliance is provided. The method includes mixing a polymeric capping layer precursor and a pigment additive to form a color capping layer; extruding a polymeric base resin to form a polymeric base layer at a base layer formation temperature; laminating a barrier layer between the polymeric base layer and the color capping layer to form the liner at about the base layer formation temperature; and forming a textured pattern on an outer surface of the color capping layer. The liner further includes a capping region, a barrier region, and a base region where the capping region includes the pigment additive.

According to another aspect of the disclosure, a method for making a liner for an appliance is provided. The method includes mixing a polymeric capping layer precursor and a pigment additive to form a color capping layer; extruding a polymeric base layer at a base layer formation temperature into a laminating assembly contemporaneously with the color capping layer and a barrier layer to form the liner at about the base layer formation temperature; and forming a textured pattern on an outer surface of the color capping layer. The liner comprises a capping region, a barrier region, and a base region where the capping region includes the pigment additive.

According to yet a further aspect, a liner for an appliance is provided. The liner includes a polymeric liner having a trilayer structure where the trilayer structure includes: a capping layer having a high-impact polystyrene material and a pigment additive where an outer surface of the capping layer includes a textured pattern; a base layer having a high-impact polystyrene material; and a barrier layer including a polyethylene material where the barrier layer is disposed between the capping layer and the base layer. The capping layer, barrier layer, and the base layer are directly coupled with substantially no interfaces between them.

These and other features, advantages, and objects of the present disclosure will be further understood and appreciated by those skilled in the art upon studying the following specification, claims, and appended drawings.

### BRIEF DESCRIPTION OF THE DRAWINGS

The foregoing summary, as well as the following detailed description of the invention, will be better understood when read in conjunction with the appended drawings. For the purpose of illustrating the invention there are shown in the drawings certain embodiment(s) which are presently disclosed. It should be understood, however, that the invention is not limited to the precise arrangements and instrumentalities shown. Drawings are not necessarily to scale. Certain features of the invention may be exaggerated in scale or shown in schematic form in the interest of clarity and conciseness.

In the drawings:
FIG. 1 is a schematic of a refrigeration appliance including a liner according to aspects of the present disclosure;
FIG. 2A is a schematic of an enlarged cross-section of the liner at region II marked in FIG. 1 comprising a color capping layer, a barrier layer, and a polymeric base layer, according to some aspects of the present disclosure;
FIG. 2B is a schematic of an enlarged cross-section of the liner at region II marked in FIG. 1 comprising a color capping layer and a polymeric base layer according to some aspects of the present disclosure;
FIG. 3 is a flow-chart schematic of a method for making a liner for an appliance according to some aspects of the present disclosure;
FIG. 4 is a schematic of a hot lamination process according to some aspects of the present disclosure; and
FIG. 5 is a schematic for shaping the liner into a final liner to be installed in a refrigeration appliance according to some aspects of the present disclosure.

### DETAILED DESCRIPTION OF EMBODIMENTS

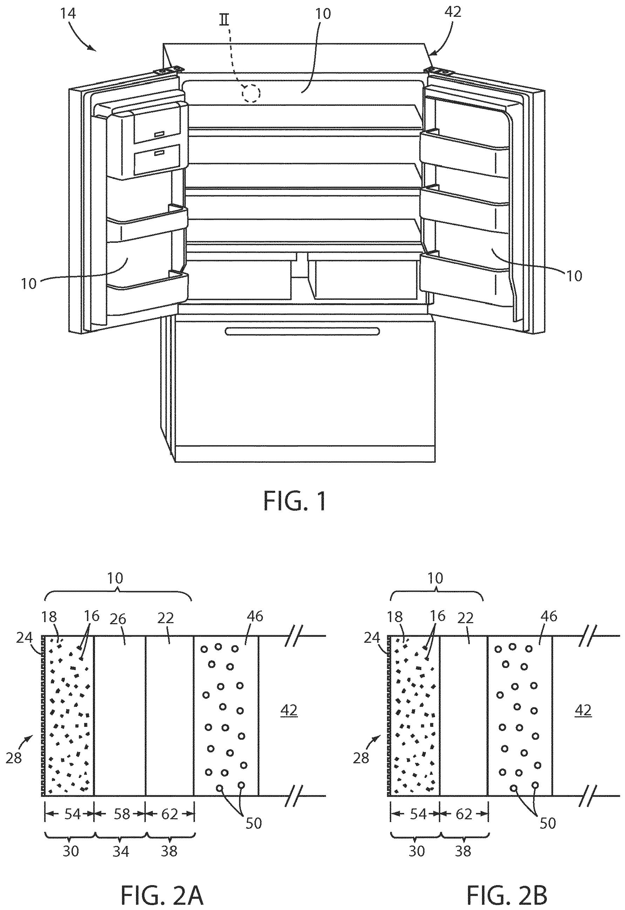

For purposes of description herein the terms "upper," "lower," "right," "left," "rear," "front," "vertical," "horizontal," and derivatives thereof shall relate to the device as oriented in FIG. 1. However, it is to be understood that the device may assume various alternative orientations and step sequences, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

Referring to FIGS. 1-5, a method 100 of making a liner 10 for an appliance 14 is provided. The method 100 includes mixing a polymeric capping layer precursor and a pigment additive 16 to form a color capping layer 18 (step 104). The method 100 further includes extruding a polymeric base resin 20 to form a polymeric base layer 22 at a base layer formation temperature (step 108). The method 100 further includes laminating a barrier layer 26 between the polymeric base layer 22 and the color capping layer 18 to form the liner 10 at about the base layer formation temperature (step 112). The method additionally includes forming a textured pattern 24 on an outer surface 28 of the color capping layer 18 (step 116). The formed liner 10 includes a capping region 30, a barrier region 34, and a base region 38 where the capping region 30 includes the pigment additive 16. The method 100 additionally may include shaping the liner 10 into a final liner 74 at a shaping temperature where the final liner 74 is configured and/or is suitable for assembly into a refrigeration appliance (step 120).

Referring now to FIG. 1, the refrigeration appliance 14 is provided in an exemplary form that includes the liner 10 according to some aspects. As shown, the liner 10 is mounted to a cabinet 42 of the refrigeration appliance 14. In some configurations, the liner 10 is mounted to a foam layer 46 (see FIG. 2) installed on an interior surface of the cabinet 42. In other configurations, the liner 10 may be mounted directly to the cabinet 42. Typically, the liner 10 is attached, coupled, joined, or otherwise fastened to the cabinet 42 through the insulating foam 46, adhesive, bonding agent, mechanical fastener (e.g., rivets, screws, etc.) or another comparable approach. However, the liner 10 itself does not include any internal adhesives and, according to some aspects, includes one or more pigment additives 16 in the color capping layer 18 only (see FIGS. 2A-2B).

Referring now to FIG. 2A, the liner 10 (e.g., as incorporated into the appliance 14 depicted in FIG. 1) includes the color capping layer 18 and corresponding capping region 30, the polymeric base layer 22 and corresponding base region 38, and the barrier layer 26 and corresponding barrier region 34. The liner 10 and its combination of the barrier layer 26 sandwiched between the color capping layer 18 and polymeric base layer 22 may be positioned directly onto the foam layer 46. In some aspects, the foam layer 46 may include closed-cell and/or open-cell voids, air bubbles, and/or pores 50 distributed evenly throughout the foam layer 46. In some aspects, the foam layer 46 imparts an insulation layer between the liner 10 and the wrapper and/or cabinet 42 of the appliance 14.

The polymeric capping layer precursor used to form the color capping layer 18 may include a high-impact polystyrene (HIPS), polymethylmethacrylate (PMMS), polystyrene (PS), acrylonitrile butadiene styrene (ABS), polyurethane (PU), polypropylene (PP), polyethylene (PE), or combinations thereof. In some aspects, the polymeric capping layer precursor selected for use in the color capping layer 18 may be any known thermoplastic known in the art suitable for use in an extrusion process. In other aspects, the polymeric capping layer precursor used to form the color capping layer 18 may include a high-impact polystyrene (1115 HIPS) precursor material. As also depicted in FIG. 2A, the color capping layer 18 can be configured to have a thickness 54 (e.g., through extrusion, rolling, etc.) of about 0.10 mm to about 1.5 mm. In some aspects, the thickness 54 of the color capping layer 18 may range from about 0.25 mm to about 0.75 mm. Note that the thickness 54 of the color capping layer 18 is given in approximate dimensions, as would be typically associated with the color capping layer 18 being in a sheet or layer form before incorporation into the liner 10. The pigment additive 16 may be incorporated and/or disbursed within the color capping layer 18 at a level sufficient to impart a desired color, hue, tinting, or the like in the liner 10.

Still referring to FIG. 2A, the textured pattern 24 may be positioned on the outer surface 28 of the color capping layer 18 of the liner 10. The textured or granular pattern 24 is beneficial for the color and aesthetic preservation of the liner 10 over time since the textured pattern 24 can help protect the color capping layer 18 from visibly showing scratches, rub marks, gouges, and/or scrapes. The textured pattern 24 may include a variety of different surface patterns formed on the colored capping layer 18, for example, pyramidal, diamond, circular, trapezoidal, square, tetragonal, hexagonal, polygonal, or a combination of shapes thereof. In some aspects, the textured pattern 24 may include a 2D surface pattern, a 3D surface pattern, or a combination thereof. The textured or granular pattern 24 helps prevent visible markings or wear of the outer surface 28 of the liner 10 by offering an alternative to a glossy or smooth finished surface that can readily show marks or wear from the manufacturing process or normal wear. In some aspects, the textured or granular pattern 24 can absorb a scratch, scuff, and/or gouge while the textured pattern 24 can blend in or camouflage the respective mark.

Still referring to FIG. 2A, the color capping layer 18 of the liner 10 may include one or more pigment additives 16, configured to impart color, tinting, or the like into the liner 10. As understood by those with ordinary skill in the field of the disclosure, various metallic, ceramic, polymeric pigments, and colorants can be added at various concentrations within the polymeric capping layer precursor employed in the color capping layer 18 of the liner 10. In some aspects, the pigment additive 16 is a granulated pigment. For example, titanium oxide can be included as the pigment additive 16 to achieve a white color. In other aspects, the liner 10 having a charcoal-sparkle appearance can be created by employing carbon black in one or more of quartz, mica, and stainless steel as the pigment additive 16. In some aspects of the disclosure, the pigment additives 16 are incorporated into the capping region 30 of the color capping layer 18 at a concentration level and disbursed to ensure that the liner 10 exhibits a particular color, hue, or the like, as desired by the user of the appliance 14. In some aspects, no additional pigment additives 16 are used, directly or indirectly transferred, and/or incorporated in the base region 38 of the polymeric base layer 22 to obtain the desired color, hue, or tinting for the liner 10. According to other aspects, the pigment additives 16 may be incorporated into the capping region 30 and the base region 38 at concentrations sufficient for the liner 10 to obtain the desired color, hue, or tinting. In some aspects, the mixing step 104 includes mixing the polymeric capping layer precursor with about 5% to about 30% pigment additive 16 by weight of the color capping layer 18. According to some aspects, the pigment additives 16 are incorporated into the capping region 30 of the color capping layer 18 at a concentration from about 10% to about 25% (by weight of the capping layer 18). Optionally, the pigment additives 16 may be incorporated into the capping region 30 at a concentration from about 1% to about 10% (by weight of the capping layer 18). In still other aspects, the concentration of the pigment additive 16 in the capping region 30 of the color capping layer 18 is loaded between about 15% to about 25% (by weight of the capping layer 18) and in the base region 38 of the polymeric base layer 22, if present, from about 3% to about 5% (by weight of the base layer 22). In some aspects, the color capping layer comprises from about 70% to about 95% by weight polymeric capping layer precursor and from about 5% to about 30% pigment additive by weight.

Still referring to FIG. 2A, the barrier layer 26 and corresponding barrier region 34 may help protect the liner 10 from wrinkling, deformations, and/or delamination effects caused during manufacturing or end use. In some aspects, the barrier layer 26 may prevent the diffusion of volatiles and other potential contaminants associated with injecting the foam 46 positioned between the liner 10 and the cabinet 42. In some aspects, the contaminants associated with the foam 46 that could discolor or lead to other deteriorating defects in the liner 10 have no negative effects on the color capping layer 18 disclosed herein. The barrier layer 26 may be sandwiched directly between the color capping layer 18 and polymeric base layer 22 to form the liner 10 with no additional adhesives and/or bonding agents used between the respective layers 18, 22, 26. In some aspects, the barrier region 34 includes a polyethylene material used in combination with a material employed in the base region 38, typically a material comparable to that employed in the capping layer 18 or capping region 30, e.g., a high-impact polystyrene (HIPS). In some aspects, the barrier layer 26 may be formed using a low density polyethylene, a high density polyethylene, a polypropylene, a polycarbonate, a polyester, a polyamide, a polystyrene, a high-impact polystyrene (HIPS), or a combination thereof. According to some aspects, additional compatibilizers, as understood by those with ordinary skill in the art, are added to the barrier region 34 to ensure that the polyethylene layers and HIPS material within the barrier region 34 are combined without the formation of voids, bubbles, delamination defects, etc. In some aspects, the barrier region 34 may include one or more barrier layers 26 comprising a polyethylene material, layered on the respective material of the base layer 22. As also depicted in FIG. 2, the barrier region 34 of the barrier layer 26 can be configured with a thickness 58 (e.g., through extrusion, rolling, etc.) of about 0.10 mm to about 1.5 mm. In some aspects, the barrier layer 26 has a thickness 58 of about 0.25 mm to about 0.75 mm. Note that the thickness 58 of the barrier layer 26 is given in approximate dimensions, as would be typically associated with the barrier layer 26 being in a sheet or layer form before incorporation into the liner 10.

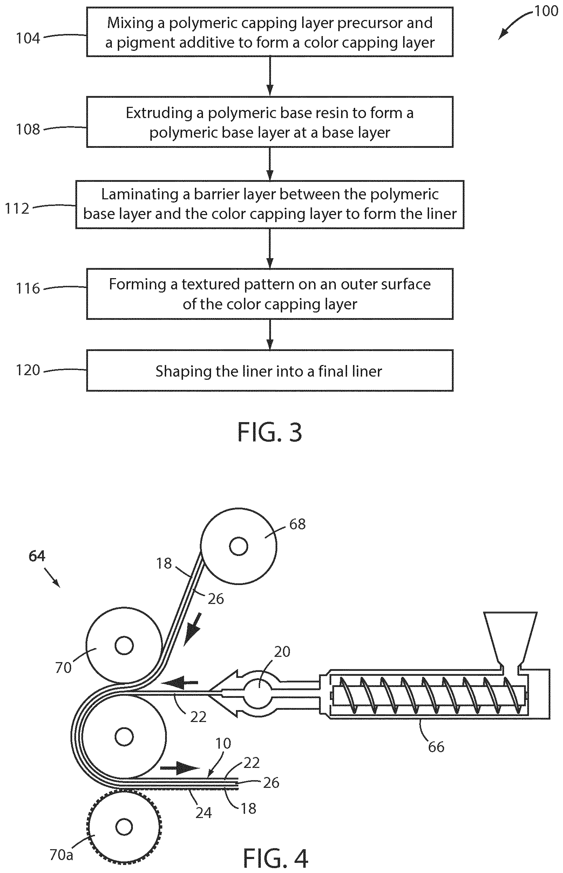

Referring to FIG. 2A, the polymeric base layer 22 may provide structural support to the liner 10 in addition to spacing the pigment additives 16 of the color capping layer 18 away from the surface of the liner 10. By putting distance or space between the outer surface of the liner 10 and the color capping layer 18, no contact may be made between the more delicate colored capping layer 18 and the user and/or potential food products stored in the appliance 14. The polymeric base resin 20 used to form the base region 38 of the polymeric base layer 22 may include a high-impact polystyrene (HIPS), polymethylmethacrylate (PMMS), polystyrene (PS), acrylonitrile butadiene styrene (ABS), polyurethane (PU), polypropylene (PP), polyethylene (PE), or combinations thereof. In some aspects, the polymeric base resin 20 selected for use in the base layer 22 are thermoplastics, suitable for use in an extrusion process. In other aspects, the polymeric base resin 20 (see FIG. 4) used to form the polymeric base layer 22 may include a high-impact polystyrene (1170 HIPS) precursor material. As also depicted in FIG. 2A, the base region 38 of the polymeric base layer 22 can be configured with a thickness 62 (e.g., through extrusion, rolling, etc.) of about 0.10 mm to about 1.5 mm. In some aspects, the polymeric base layer 22 has thickness 62 of about 0.25 mm to about 0.75 mm. Note that the thickness 62 of the base layer 22 is given in approximate dimensions, as would be typically associated with the polymeric base layer 22 being in a sheet or layer form before incorporation into the liner 10.

Still referring to FIG. 2A, the liner 10 is configured such that the capping region 30, the barrier region 34, and the base region 38 (i.e., for liner 10) are joined with substantially no interfaces between them. The term "interface", as defined herein, is meant to include boundaries marked by structural defects such as cracks, folds, or bubbles where two layers (e.g. 18, 22, and 26) meet and interact. When layers made from different polymeric materials (e.g. 18, 22, and 26) are laminated together, the blending of the respective polymeric materials at the interface between the layers is not considered an "interface" unless the boundary is marked by one or more defects that may or may not lead to a decrease in structural integrity. In some aspects, the liner 10, including the capping region 30, the barrier region 34, and the base region 38 are joined with substantially no interfaces between the respective layers forming a uniform trilayer with the appearance of a monolayer. That is, a cross-section of the liner 10 when viewed under low magnification will not reveal any indications of an interface or interfaces between the capping region 30, the barrier region 34, and the base region 38. Advantageously, the lack of any appreciable interfaces between these three regions significantly reduces the likelihood that these regions will delaminate during subsequent processing (e.g., thermal-forming of the liner 10 into a refrigeration appliance 14, such as depicted in FIG. 1) and other demands of the application environment of the liner 10. Another advantage of these liners 10 is that the base region 38, the barrier region 34, and the capping region 30 for the liner 10 are configured with substantially no interfaces between them, thus eliminating the necessity of employing adhesives or other bonding agents to join them. As these implementations of the liner 10 do not require adhesives, they can be fabricated, e.g. through lamination processes, at a lower cost and using faster fabrication processes. Further, the lack of adhesives employed between these regions tends to result in improved color uniformity for these liners 10 in comparison to conventional, pigmented multi-layer liners with layers joined with internal adhesives. In some aspects, the interfaces between the barrier layer 26 and the base layer 22, the barrier layer 26 and the capping layer 18, and/or between the base layer 22 and the capping layer 18 include a polymer blend where the respective polymeric resins used in the respective layers flow and mix to form the corresponding polymer blends at the interface.

Referring now to FIG. 2B, in some aspects, the liner 10 may not include the barrier layer 26 and corresponding barrier region 34. The liner 10 without the barrier layer 26 includes the color capping layer 18 having pigment additives 16 evenly dispersed throughout. The color capping layer 18 additionally includes the outer surface 28 having the textured pattern 24 and an inner surface directly coupled or layered onto the polymeric base layer 22. The polymeric base layer 22 may be positioned directly onto the foam layer 46 having one or more voids 50 where the foam layer 46 is sandwiched directly between the polymeric base layer 22 and the wrapper and/or cabinet 42. The capping layer thickness 54 and base layer thickness 62 may include the same thickness values described herein. Advantages of not using the barrier layer 26 in the liner 10 can include a reduction in weight, a reduction in liner 10 thickness, and/or a simpler and more efficient manufacturing process.

Referring now to FIG. 3, the method 100 of making the liner 10 for the refrigeration appliance 14 is depicted in schematic form. The method 100 includes the mixing step 104 for mixing the polymeric capping layer precursor and the pigment additive 16 to form the color capping layer 18. In some aspects, the mixing step 104 includes mixing the polymeric capping layer precursor with about 5% to about 30% pigment additive 16 by weight or from about 15% to about 25% pigment additive 16 by weight of the capping layer 18. The mixing step 104, for example, can be conducted within an extruder or in a separate vessel or container. According to some aspects, the mixing step 104 is conducted such that the polymeric capping layer precursor and the pigment additive 16 are mixed in particulate form. In some aspects, the mixing step 104 is conducted such that the color capping layer 18 exhibits a predetermined color. In some aspects, the color capping layer 18 includes the polymeric capping layer precursor from about 50% to about 98% by weight, from about 60% to about 95% by weight, from about 70% to about 95% by weight, or from about 75% to about 95% by weight of the color capping layer 18.

Referring again to FIG. 3, the method 100 of making the liner 10 for the appliance 14 further includes the extruding step 108 for forming the polymeric base layer 22. In some aspects, the extruding step 108 is conducted in an extruder suitable for extrusion of thermoplastic materials into polymeric layers. According to some aspects, the base layer formation temperature is set between about 120°F to about 425°F, about 120°F to about 160°F, from about 275°F to about 400°F, or from about 290°F to about 370°F. In other aspects, the extruding step 108 is conducted with other apparatuses to accomplish the same or similar function as would be understood by those with ordinary skill in the art, e.g., hot-pressing apparatus, injection molding apparatus, etc.

Still referring to FIG. 3, the method 100 of making the liner 10 of the appliance 14 further includes the laminating step 112 for laminating the barrier layer 26 between the color capping layer 18 and the polymeric base layer 22 to form the liner 10 at about the base layer formation temperature. According to some aspects of the disclosure, the laminating step 112 of the method 100 is conducted by using rollers, e.g. one or more calendering rollers 70 (see FIG. 4). Accordingly, the laminating step 112 using rollers can involve rolling the polymeric base layer 22, the color capping layer 18, and the barrier layer 26 together, at about the base layer formation temperature to form the liner 10. By rolling these layers together at about the same temperature in which they were extruded or otherwise processed in earlier steps, the laminating step 112 ensures that these layers are joined together with substantially no interfaces between them. In some aspects, the liner 10 can be characterized as a trilayer appearing as a monolayer having substantially no interfaces between the three respective regions 30, 34 and 38. In some aspects, the lamination step 112 is conducted to form the liner 10 having substantially no interfaces between the capping region 30, the barrier region 34, and the base region 38. In some aspects, the laminating step is conducted such that the color capping layer 18 exhibits a predetermined color.

In some aspects, the lamination step 112 can be heated to about the base layer formation temperature, e.g., about 275°F to about 400°F. That is, a temperature that is about the base layer formation temperature allows for efficient laminating of the respective layers 18, 22, 26. In some aspects, temperatures considered "about the base layer formation temperature" include temperatures less than or equal to 3°F, less than or equal to 5°F, less than or equal to 10°F, or less than or equal to 15°F of the melting temperature of the polymeric base resin 20 or blend used. The pressure applied by the rollers in the lamination step 112, and the fact that the rollers are set to approximately the base layer formation temperature, ensures that the capping layer 18, base layer 22 and barrier layer 26 are merged together during the lamination step 112 to form the uniform liner 10.

Referring now to FIG. 4, in some aspects, the method 100 of making the liner 10 of the appliance 14 may reduce energy usage and timing needs by directly extruding the polymeric base resin 20 and corresponding polymeric base layer 22 into a laminating assembly 64. In these aspects, as the polymeric base layer 22 is freshly formed using an extruder 66 where the polymeric base layer 22 is still hot from the extrusion and forming processes, the polymeric base layer 22 is directly positioned into the laminating assembly 64 contemporaneously with the color capping layer 18 and barrier layer 26 loaded from a pulley roller 68 to be laminated into the liner 10 using one or more rollers 70. At least one of the advantages of laminating the freshly formed and still hot polymeric base layer 22 with the color capping layer 18 and barrier layer 26 is the ability to save energy from not having to heat each of the respective layers 18, 22, 26 to about the base layer formation temperature. Since the temperature of the polymeric base layer 22 is about the base layer formation temperature upon being formed, the polymeric base layer 22 may be readily laminated to the barrier layer 26 and color capping layer 18 to form the liner 10 with substantially no interfaces between the respective layers (see FIG. 2A). In some aspects, no barrier layer 26 may be incorporated and the polymeric base layer 22 may be readily and directly laminated to the color capping layer 18 to form the liner 10 with substantially no interfaces between the respective layers (see FIG. 2B). In some aspects, the base layer formation temperature may be from about 120 °F to about 160 °F, from about 125 °F to about 350 °F, from about 175 °F to about 325 °F, or from about 200 °F to about 275 °F. In some aspects, the base layer formation temperature is above their glass transition temperature for amorphous polymers or when the amorphous polymer begins to flow and/or above their melting point for crystalline polymers or when the crystalline polymer begins to flow.

Still referring to FIG. 4, the method 100 of making the liner 10 includes forming the textured pattern 24 on the outer surface 28 on the color capping layer 18 (step 116). In some aspects, the textured pattern 24 may be formed into the outer surface 28 on the color capping layer 18 using a granular pattern mold roller 70a. Depending on the desired aesthetic and color appearance desired for the liner 10, the granular pattern mold roller 70a can be configured to impart or mold, for example, pyramidal, diamond, circular, trapezoidal, square, tetragonal, hexagonal, polygonal, or a combination of shapes thereof into the outer surface 28 of the color capping layer 18. In some aspects, the textured pattern 24 may include a 2D surface pattern, a 3D surface pattern, or a combination thereof. The added textured or granular pattern 24 helps maintain color, prevent visible markings, and/or prevent visible wear of the outer surface 28 of the liner 10 by offering an alternative to a glossy or smooth finished surface that readily can show marks or wear from the manufacturing process or normal wear.

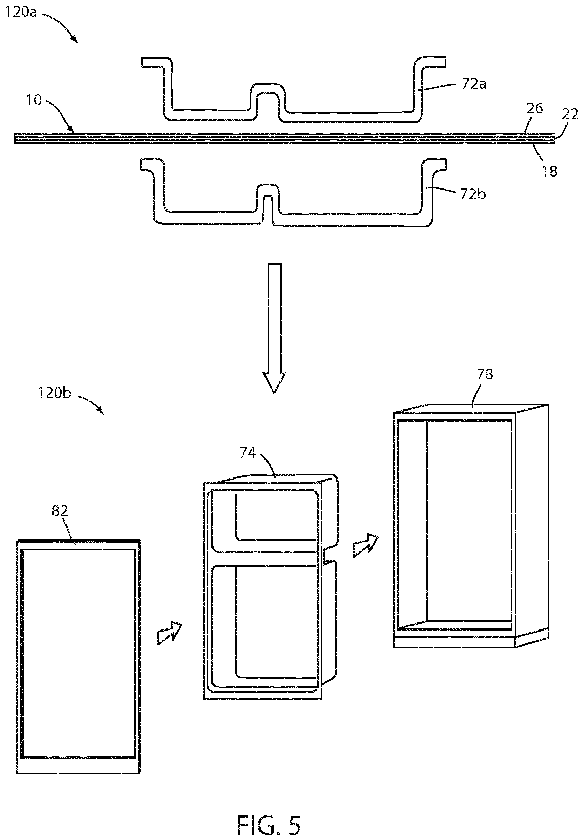

Referring again to FIG. 3, the method 100 of making the liner 10 can be conducted with an additional shaping step (step 120) after formation of the liner in steps 104, 108, 112 and 116. Referring now to FIG. 5, the step 120 of method 100 can be conducted by shaping the liner 10 into a final liner 74 using a shaping temperature suitable for subsequent assembly into the refrigeration appliance. To impart a desired shape to the liner 10, the liner 10 may be heat pressed or compression molded between a heated top mold 72a and a heated bottom mold 72b (step 120a). The final liner 74 is formed to a desired shape/design and is configured for assembly into the appliance 14 (e.g., the refrigeration appliance 14 as shown in FIG. 1). In some aspects, the shaping step 120 is conducted according to a thermal-forming process, typically at a temperature that approaches, but does not exceed, the base layer formation temperature, employed in earlier steps of the method 100. In some aspects, the shaping temperature of the shaping step may range between temperatures from about 200°F to about 350°F.

Still referring to FIG. 5, the final liner 74 may be assembled with a wrapper 78 (e.g. the cabinet 42 as shown in FIG. 1) and a trim breaker 82 to form an insulation structure (step 120b). The insulation structure may then be filled with the foam layer 46 or other insulative material known in the art to form the fully insulated cabinet 42 structure.

The method 100 of making liners 10 and their corresponding trilayer structures result in liners 10 having better surface properties to prevent scratching or other visible aberrations of the color and/or texture. For example, the barrier layer 26 in combination with the textured pattern 24 positioned on the outer surface 28 of the liner 10 hides visible scratches or marking on the color capping layer 18. The ability to position the pigment additive 16 and the color capping layer 18 on one side of the liner 10 with the textured pattern 24 positioned on the outer surface 28 of the liner 10 allows the imparted color, tinting, hue or the like from visibly showing damage during the manufacturing or end use of the appliance 14.

It is understood that the descriptions outlining and teaching the method of making the liner 10 previously discussed, which can be used in any combination, apply equally well to the liner 10 for the appliance 14. Accordingly, the liner 10 includes a polymeric liner having the trilayer structure where the trilayer structure includes: the color capping layer 18 including a high-impact polystyrene material and the pigment additive 16 wherein the outer surface 28 of the color capping layer 8 includes the textured pattern 24; the polymeric base layer 22 including a high-impact polystyrene material; and the barrier layer 26 including a polyethylene material wherein the barrier layer 34 is disposed between the color capping layer 18 and the polymeric base layer 22. The color capping layer 18, barrier layer 26, and the polymeric base layer 22 are directly coupled with substantially no interfaces between them.

Embodiment A is a method of making a liner for an appliance comprising: mixing a mixing a polymeric capping layer precursor and a pigment additive to form a color capping layer; extruding a polymeric base resin to form a polymeric base layer at a base layer formation temperature; laminating a barrier layer between the polymeric base layer and the color capping layer to form the liner at about the base layer formation temperature; and forming a textured pattern on an outer surface of the color capping layer.

The method of Embodiment A wherein the color capping layer is formed using at least one of a high-impact polystyrene (HIPS), polymethylmethacrylate (PMMS), polystyrene (PS), acrylonitrile butadiene styrene (ABS), polyurethane (PU), polypropylene (PP), polyethylene (PE), or combinations thereof.

The method of Embodiment A or Embodiment A with any of the intervening features wherein the color capping layer comprises from about 70% to about 95% by weight polymeric capping layer precursor and from about 5% to about 30% pigment additive by weight.

The method of Embodiment A or Embodiment A with any of the intervening features wherein the color capping layer comprises from about 1% to about 10% of the pigment additive by weight.

The method of Embodiment A or Embodiment A with any of the intervening features wherein the barrier layer is formed using at least one of a low density polyethylene, a high density polyethylene, a polypropylene, or a combination thereof.

The method of Embodiment A or Embodiment A with any of the intervening features wherein the base layer formation temperature is from about 120 °C to about 160 °C.

The method of Embodiment A or Embodiment A with any of the intervening features wherein the laminating of the barrier layer between the polymeric base layer and the color capping layer to form the liner is conducted at a temperature that is about the same as the base layer formation temperature.

The method of Embodiment A or Embodiment A with any of the intervening features wherein the mixing of the polymeric capping layer precursor and the pigment additive to form the color capping layer is conducted using an extruder.

The method of Embodiment A or Embodiment A with any of the intervening features wherein the laminating of the barrier layer between the polymeric base layer and the color capping layer to form the liner is conducted using one or more calendering rollers.

The method of Embodiment A or Embodiment A with any of the intervening features wherein the textured pattern comprises at least one shape including a pyramidal, diamond, circular, trapezoidal, square, tetragonal, hexagonal, polygonal, or a combination of shapes thereof.

The method of Embodiment A or Embodiment A with any of the intervening features wherein the method further includes shaping the liner into a final liner at a shaping temperature to form a final liner suitable for assembly into a refrigeration appliance.

The method of Embodiment A or Embodiment A with any of the intervening features wherein the shaping temperature is from about 200 °F to about 350 °F.

The method of Embodiment A or Embodiment A wherein the color capping layer comprises a high-impact polystyrene material.

The method of Embodiment A or Embodiment A wherein the polymeric base layer comprises a high-impact polystyrene material.

The method of Embodiment A or Embodiment A wherein the color capping layer, the barrier layer, and the polymeric base layer are directly coupled to one another with substantially no interfaces disposed therebetween.

Embodiment B is a method of making a liner for an appliance comprising: mixing a polymeric capping layer precursor and a pigment additive to form a color capping layer; extruding a polymeric base layer at a base layer formation temperature into a laminating assembly contemporaneously with the color capping layer and a barrier layer to form the liner at about the base layer formation temperature; and forming a textured pattern on an outer surface of the color capping layer.

The method of Embodiment B wherein the color capping layer comprises from about 70% to about 95% by weight polymeric capping layer precursor and from about 5% to about 30% pigment additive by weight.

The method of Embodiment B or Embodiment B with any of the intervening features wherein the color capping layer and the base layer each comprise high-impact polystyrene material.

The method of Embodiment B or Embodiment B with any of the intervening features wherein the textured pattern comprises at least one shape including a pyramidal, diamond, circular, trapezoidal, square, tetragonal, hexagonal, polygonal, or a combination of shapes thereof.

The method of Embodiment B or Embodiment B with any of the intervening features wherein the base layer formation temperature is from about 120 °C to about 160 °C.

The method of Embodiment B or Embodiment B with any of the intervening features wherein the method further comprises shaping the liner into a final liner at a shaping temperature, the final liner suitable for assembly into a refrigeration appliance.

Embodiment C is a liner for an appliance comprising: a polymeric liner comprising a trilayer structure, the trilayer structure comprising: a color capping layer comprising a high-impact polystyrene material and a pigment additive wherein an outer surface of the capping layer includes a textured pattern; a polymeric base layer comprising a high-impact polystyrene material; and a barrier layer comprising a polyethylene material wherein the barrier layer is disposed between the capping layer and the base layer, wherein the capping layer, barrier layer, and the base layer are directly coupled with substantially no interfaces between them.

The liner of Embodiment C wherein the capping region comprises from about 5% to about 30% pigment additive by weight.

The liner of Embodiment C with any of the intervening features wherein the liner is configured for assembly into a refrigeration appliance.

The liner of Embodiment C with any of the intervening features wherein the liner is configured for assembly into a refrigeration appliance.

The liner of Embodiment C with any of the intervening features wherein the textured pattern comprises at least one shape including a pyramidal, diamond, circular, trapezoidal, square, tetragonal, hexagonal, polygonal, or a combination of shapes thereof.

## Claims

1. A method (100) of making a liner (10) for an appliance (14), the method (100) comprising:
mixing (104) a polymeric capping layer precursor and a pigment additive (16) to form a color capping layer (18);
extruding (108) a polymeric base resin (20) to form a polymeric base layer (22) at a base layer formation temperature;
laminating (112) a barrier layer (26) between the polymeric base layer (22) and the color capping layer (18) to form the liner (10); and
forming (116) a textured pattern (24) on an outer surface (28) of the color capping layer (18).

2. The method (100) according to claim 1, wherein the color capping layer (18) is formed using at least one of a polymethylmethacrylate (PMMS), polystyrene (PS), acrylonitrile butadiene styrene (ABS), polyurethane (PU), polypropylene (PP), polyethylene (PE), or combinations thereof.

3. The method (100) according to any one of claims 1 and 2, wherein the color capping layer (18) comprises from about 70% to about 95% by weight polymeric capping layer precursor and from about 5% to about 30% pigment additive (16) by weight.

4. The method (100) according to claim 1, wherein the color capping layer (18) comprises from about 1% to about 10% of the pigment additive (16) by weight.

5. The method (100) according to any one of claims 1-4, wherein the barrier layer (26) is formed using at least one of a low density polyethylene, a high density polyethylene, a polypropylene, or a combination thereof.

6. The method (100) according to any one of claims 1-5, wherein the formation temperature of the base layer (22) is from about 120 °C to about 160 °C.

7. The method (100) according to claim 6, wherein the laminating (112) of the barrier layer (26) between the polymeric base layer (22) and the color capping layer (18) to form the liner (10) is conducted at about the formation temperature of the base layer (22).

8. The method (100) according to any one of claims 1-7, wherein the mixing (104) of the polymeric capping layer precursor and the pigment additive (16) to form the color capping layer (18) is conducted using an extruder (66).

9. The method (100) according to any one of claims 1-8, wherein the laminating (112) of the barrier layer (26) between the polymeric base layer (22) and the color capping layer (18) to form the liner (10) is conducted with one or more calendering rollers (70).

10. The method (100) according to any one of claims 1-9, wherein the textured pattern (24) comprises at least one shape including a pyramidal, diamond, circular, trapezoidal, square, tetragonal, hexagonal, polygonal, or a combination of shapes thereof.

11. The method (100) according to claim 1, including:
shaping (120) the liner (10) into a final liner (74) at a shaping temperature, wherein the final liner (74) is suitable for assembly into a refrigeration appliance (14).

12. The method (100) according to claim 11, wherein the shaping temperature is about 200°F to about 350°F.

13. The method (100) according to claim 1, wherein the color capping layer (18) comprises a high-impact polystyrene material.

14. The method (100) according to claim 13, wherein the polymeric base layer (22) comprises a high-impact polystyrene material.

15. The method (100) according to any one of claims 1-14, wherein the color capping layer (18), the barrier layer (26), and the polymeric base layer (22) are directly coupled to one another with substantially no interfaces disposed therebetween.
